(19) Europäisches Patentamt / European Patent Office / Office européen des brevets

(11) **EP 3 741 148 B1**

(12) **FASCICULE DE BREVET EUROPEEN**

(45) Date de publication et mention
de la délivrance du brevet:
**04.05.2022   Bulletin 2022/18**

(21) Numéro de dépôt: **19703167.7**

(22) Date de dépôt: **11.01.2019**

(51) Classification Internationale des Brevets (IPC):
**H04W 12/06** *(2021.01)*        **H04W 12/04** *(2021.01)*

(52) Classification Coopérative des Brevets (CPC):
**H04W 12/06; H04W 12/04; H04W 12/0431;**
**H04L 2463/061**

(86) Numéro de dépôt international:
**PCT/FR2019/050056**

(87) Numéro de publication internationale:
**WO 2019/141924 (25.07.2019 Gazette 2019/30)**

(54) **TECHNIQUE DE DÉTERMINATION D'UNE CLÉ DESTINÉE À SÉCURISER UNE COMMUNICATION ENTRE UN ÉQUIPEMENT UTILISATEUR ET UN SERVEUR APPLICATIF**

VERFAHREN ZUM BESTIMMEN EINES SCHLÜSSELS ZUR SICHEREN KOMMUNIKATION ZWISCHEN EINEM BENUTZERGERÄT UND EINEM ANWENDUNGSSERVER

TECHNIQUE FOR DETERMINING A KEY FOR SECURING COMMUNICATION BETWEEN A USER EQUIPMENT AND AN APPLICATION SERVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **19.01.2018  FR 1850440**

(43) Date de publication de la demande:
**25.11.2020   Bulletin 2020/48**

(73) Titulaire: **ORANGE**
**92130 Issy-les-Moulineaux (FR)**

(72) Inventeur: **GAMISHEV, Todor**
**92326 Châtillon Cedex (FR)**

(56) Documents cités:
**EP-A1- 2 037 620        EP-B1- 2 037 620**
**US-A1- 2015 189 507**

• **"3rd Generation Partnership Project; Technical Specification Group Services and System Aspects; Generic Authentication Architecture (GAA); Generic Bootstrapping Architecture (GBA) (Release 15)", 3GPP STANDARD; TECHNICAL SPECIFICATION; 3GPP TS 33.220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V15.1.0, 4 janvier 2018 (2018-01-04), pages 1-93, XP051392345,**

EP 3 741 148 B1

**Description**

L'invention se rapporte au domaine général des télécommunications.

L'invention concerne plus particulièrement une technique de détermination d'une clé destinée à sécuriser une communication entre un équipement utilisateur et un serveur applicatif.

La technique de détermination d'une clé se situe dans le domaine des réseaux de communication mobiles.

Afin de permettre à un équipement utilisateur UE (pour « *User Equipment* »), également appelé terminal, de communiquer de manière sécurisée avec un serveur applicatif, une architecture dite GBA, pour « *Generic Bootstrapping Architecture* », a été définie par le groupe de normalisation 3GPP dans un contexte d'un réseau mobile, par exemple de quatrième génération. Cette architecture est définie dans la spécification technique référencée 3GPP TS 33.220 version V15.1.0, intitulée « Generic Authentication Architecture (GAA); Generic Bootstrapping Architecture (GBA) (Release 15) ». Dans cette architecture GBA, il est prévu une fonction de serveur d'amorçage BSF (pour « *Bootstrapping Server Function* ») mettant en œuvre une authentification du terminal et permettant de définir une clé maître Ks associée à un identifiant de transaction d'amorçage B_TID (pour « *Bootstrapping Transaction Identifier* »). Une fois cette clé maître Ks définie, le terminal et la fonction BSF dérivent une clé Ks_NAF à partir de la clé maître Ks pour sécuriser les échanges avec le serveur applicatif NAF. Plus précisément, cette clé Ks_NAF est dérivée à partir de la clé maître Ks en appliquant une fonction de dérivation de clé KDF (pour « *Key Derivation Function* ») à des paramètres de dérivation de clé. Ces paramètres comprennent notamment un identifiant du serveur applicatif NAF_Id et le nombre aléatoire RAND utilisé lors de l'authentification. A l'issue de ces actions, le terminal et la fonction BSF partagent une clé Ks_NAF destinée à être utilisée pour sécuriser les échanges entre le terminal et le serveur applicatif NAF. Le serveur applicatif NAF demande alors la clé Ks_NAF associée à l'identifiant de transaction B_TID à la fonction BSF. Le terminal et le serveur applicatif NAF peuvent alors communiquer de manière sécurisée au moyen de la clé Ks_NAF.

L'opérateur du réseau mobile est dans ce contexte un intermédiaire qui utilise les secrets partagés entre le système d'abonnés nominal HSS (pour « *Home Subscriber System* ») et le module de sécurité embarqué dans le terminal pour garantir la sécurisation du lien entre le serveur applicatif NAF et le terminal UE sans que ces deux entités n'aient besoin de partager un secret.

L'introduction d'une telle architecture GBA dans le réseau d'un opérateur mobile entraîne des coûts importants, notamment du fait de l'introduction de cette fonction BSF et de son interfaçage avec le réseau mobile.

Par ailleurs, une fonction similaire à cette fonction GBA n'est pas prévue actuellement dans le réseau mobile de cinquième génération, dit 5G, en cours de normalisation par le groupe 3GPP.

Un des buts de l'invention est de remédier à des insuffisances/inconvénients de l'état de la technique et/ou d'y apporter des améliorations.

Selon un premier aspect, l'invention a pour objet un procédé de détermination d'une clé destinée à sécuriser une communication entre un équipement utilisateur et un serveur applicatif. Le procédé comprend au niveau de l'équipement utilisateur :

- une authentification de l'équipement utilisateur par un serveur d'authentification d'un réseau de communication mobile, une clé maître secrète étant générée au cours de ladite authentification par l'équipement utilisateur et le serveur d'authentification ;
- un envoi par l'équipement utilisateur au serveur d'authentification d'une demande de clé pour communiquer avec le serveur applicatif ;
- un calcul de ladite clé au moyen d'une fonction de dérivation de clé appliquée à au moins un aléa, un identifiant d'utilisateur et un identifiant du serveur applicatif en utilisant la clé maître, ledit aléa ayant été reçu par l'équipement utilisateur du serveur d'authentification.

Corrélativement, le procédé de détermination d'une clé destinée à sécuriser une communication entre un équipement utilisateur et un serveur applicatif comprend au niveau du serveur d'authentification :

- une authentification de l'équipement utilisateur par un serveur d'authentification d'un réseau de communication mobile, une clé maître secrète étant générée au cours de ladite authentification par l'équipement utilisateur et le serveur d'authentification ;
- une réception par le serveur d'authentification d'une demande de clé envoyée par l'équipement utilisateur pour communiquer avec le serveur applicatif ;
- un envoi par le serveur d'authentification à l'équipement utilisateur d'un aléa ;
- un calcul de ladite clé au moyen d'une fonction de dérivation de clé appliquée à au moins l'aléa, un identifiant d'utilisateur et un identifiant du serveur applicatif en utilisant la clé maître.

Grâce à cette technique, la clé permettant de sécuriser une communication entre l'équipement utilisateur et le serveur applicatif est dérivée à partir d'une clé maître générée au cours d'une authentification mise en œuvre par le serveur d'authentification du réseau de communication mobile. La technique est ainsi mise en œuvre par un serveur d'authentification qui est déjà intégré et donc interfacé dans le réseau de communication mobile, notamment avec le serveur de gestion des données utilisateur. Il n'est pas nécessaire de prévoir un serveur spécialisé, dit serveur d'amorçage, pour déterminer cette clé. De plus, le calcul de la clé s'effectue de manière indépendante par rapport à l'authentification : un aléa est utilisé pour calculer la clé indépendamment de celui utilisé pour l'authentification. La clé maître et la clé dérivée sont ainsi découplées, des aléas distincts ayant été utilisés. Il est ainsi possible de dériver autant de clés que nécessaire, sous réserve que la clé maître ne soit pas expirée. Une fois la clé dérivée, cette dernière reste valide même si la clé maître a été modifiée. Une communication sécurisée au moyen de la clé calculée peut alors être établie entre l'équipement utilisateur et le serveur applicatif.

Les différents modes ou caractéristiques de réalisation mentionnés ci-après peuvent être ajoutés indépendamment ou en combinaison les uns avec les autres, au procédé de détermination d'une clé tel que défini précédemment.

Dans un mode de réalisation particulier, le serveur d'authentification fournit au serveur applicatif la clé qu'il a calculée.

Dans un mode de réalisation particulier du procédé de détermination d'une clé, cette authentification est déclenchée lors d'un enregistrement de l'équipement utilisateur auprès du réseau de communication mobile.

La technique proposée tire ainsi parti de l'authentification qui a été mise en œuvre lors de l'enregistrement de l'équipement utilisateur auprès du réseau de communication mobile. En effet, dans la procédure d'authentification actuellement en cours de normalisation par le groupe 3GPP pour le système de cinquième génération, noté 5G, définie dans le document de spécification 3GPP TS 33.501 V0.6.0 (2017-12) « Security Architecture and Procédures for 5G System (Release 15) », une clé maître $K_{AUSF}$ est déterminée par l'équipement utilisateur et le serveur mettant en œuvre la fonction d'authentification AUSF (pour « *Authentication Server Function »).* Pour une authentification EAP-AKA', la clé maître $K_{AUSF}$ est déterminée à partir d'une clé de session étendue EMSK (pour « *Extended Master Session Key* »)*.* Pour une authentification 5G AKA, la clé maître $K_{AUSF}$ est dérivée de clés de chiffrement et d'intégrité. Le document de spécification TS 33.501, dans sa version courante, notamment au paragraphe 6.2.2.1, indique que le serveur d'authentification peut mémoriser cette clé maître $K_{AUSF}$ générée entre la procédure d'authentification et les procédures d'accord de clé entre entités du réseau de communication mobile et l'équipement utilisateur. Ce même document de spécification indique également au paragraphe 6.2.1 dans une note éditoriale que lorsque le serveur d'authentification mémorise cette clé maître $K_{AUSF}$, le besoin ou non pour l'équipement utilisateur de la mémoriser est pour étude ultérieure. On comprend que pour mettre en œuvre la technique de détermination proposée la clé maître $K_{AUSF}$ doit être mémorisée aussi bien par le serveur d'authentification que l'équipement utilisateur. Cette clé maître $K_{AUSF}$ étant utilisée pour dériver une clé destinée à sécuriser une communication entre un équipement utilisateur et un serveur applicatif, il n'est pas nécessaire de mettre en œuvre une nouvelle procédure d'authentification spécifique à cette communication avec le serveur applicatif, contrairement ce qui est requis dans la procédure actuelle GBA. Ceci évite donc de solliciter l'élément de sécurité de l'équipement utilisateur à chaque fois que l'équipement utilisateur souhaite communiquer avec un serveur applicatif. Cette technique est également simple à mettre en œuvre dans un réseau de communication mobile 5G, dans la mesure où il suffit d'intégrer un nouveau service au serveur d'authentification. Ce dernier expose alors ce nouveau service et peut être contacté par un serveur applicatif pour déterminer la clé destinée à sécuriser une communication entre l'équipement utilisateur et le serveur applicatif.

Dans un mode de réalisation particulier du procédé de détermination, l'équipement utilisateur envoie au serveur applicatif une demande d'accès et reçoit du serveur applicatif une preuve préparée par le serveur d'authentification et à destination de l'équipement utilisateur, une vérification de ladite preuve par l'équipement utilisateur conditionnant l'envoi de la demande de clé.

Corrélativement, le serveur d'authentification fournit au serveur applicatif une preuve préparée à destination de l'équipement utilisateur, ladite preuve étant destinée à être envoyée par le serveur applicatif à l'équipement utilisateur en réponse à une demande d'accès envoyée par l'équipement utilisateur, une vérification de ladite preuve par l'équipement utilisateur conditionnant l'envoi de la demande de clé au serveur d'authentification.

Un jeton d'authentification comprend par exemple cette preuve. Cette preuve, préparée par le serveur d'authentification et fournie par le serveur applicatif à l'équipement utilisateur, permet à ce dernier de vérifier que le serveur applicatif est bien autorisé et ceci avant toute dérivation de clé au niveau de l'équipement utilisateur. Dans la procédure actuelle GBA, l'équipement utilisateur dérive la clé avant même de s'assurer que le serveur applicatif est autorisé. Ce dernier peut ne pas avoir été autorisé par le serveur BSF et peut ainsi ne pas disposer de la clé dérivée.

Corrélativement, suite à une demande d'accès reçue en provenance de l'équipement utilisateur, le serveur applicatif reçoit une preuve préparée à destination de l'équipement utilisateur et envoie cette preuve à l'équipement utilisateur, une vérification de ladite preuve par l'équipement utilisateur conditionnant l'envoi de la demande de clé au serveur d'authentification.

Dans un mode de réalisation particulier, le serveur d'authentification vérifie qu'il a calculé une clé destinée à sécuriser une communication entre ledit équipement utilisateur et ledit serveur applicatif, ladite vérification conditionnant l'envoi à l'équipement utilisateur de l'aléa.

Ainsi, l'équipement utilisateur ne dérive pas de clé lorsque le serveur applicatif n'a pas sollicité au préalable le serveur d'authentification pour cet équipement utilisateur.

Selon un deuxième aspect, l'invention concerne un équipement utilisateur, agencé pour communiquer avec un serveur applicatif par l'intermédiaire d'un réseau de communication mobile, cet équipement comprenant :

- un module d'authentification de l'équipement utilisateur par un serveur d'authentification du réseau de communication mobile, une clé maître secrète étant générée au cours de ladite authentification par l'équipement utilisateur et le serveur d'authentification ;
- un module d'envoi par l'équipement utilisateur au serveur d'authentification d'une demande de clé pour communiquer avec le serveur applicatif ;
- un module de calcul d'une clé destinée à sécuriser une communication entre l'équipement utilisateur et le serveur applicatif au moyen d'une fonction de dérivation de clé appliquée à au moins un aléa, un identifiant d'utilisateur et un identifiant du serveur applicatif en utilisant la clé maître, ledit aléa ayant été reçu par l'équipement utilisateur du serveur d'authentification.

Les avantages énoncés pour le procédé de détermination d'une clé selon le premier aspect sont transposables directement à l'équipement utilisateur.

Cet équipement utilisateur peut bien entendu comporter en termes structurels les différentes caractéristiques relatives au procédé de détermination d'une clé tel que décrit précédemment, qui peuvent être combinées ou prises isolément.

Selon un troisième aspect, l'invention concerne un serveur d'authentification d'un réseau de communication mobile, ce serveur d'authentification comprenant :

- un module d'authentification, agencé pour authentifier un équipement utilisateur, une clé maître secrète étant générée au cours de ladite authentification par l'équipement utilisateur et le serveur d'authentification ;
- un module de réception d'une demande de clé envoyée par l'équipement utilisateur pour communiquer avec un serveur applicatif ;
- un module d'envoi par le serveur d'authentification à l'équipement utilisateur d'un aléa ;
- un module de calcul d'une clé destinée à sécuriser une communication entre l'équipement utilisateur et le serveur applicatif, ladite clé étant calculée au moyen d'une fonction de dérivation de clé appliquée à au moins l'aléa, un identifiant d'utilisateur et un identifiant du serveur applicatif en utilisant la clé maître.

Les avantages énoncés pour le procédé de détermination d'une clé selon le premier aspect sont transposables directement au serveur d'authentification.

Ce serveur d'authentification peut bien entendu comporter en termes structurels les différentes caractéristiques relatives au procédé de détermination d'une clé tel que décrit précédemment, qui peuvent être combinées ou prises isolément.

Selon un quatrième aspect, l'invention concerne un système de détermination d'une clé destinée à sécuriser une communication entre un équipement utilisateur et un serveur applicatif, ce système comprenant au moins un équipement utilisateur selon le deuxième aspect et un serveur d'authentification selon le troisième aspect..

Les avantages énoncés pour le procédé de détermination d'une clé selon le premier aspect sont transposables directement au système de détermination d'une clé.

Dans un mode de réalisation particulier, le système comprend en outre le serveur applicatif, ledit serveur applicatif comprenant un module de communication, agencé pour recevoir du serveur d'authentification ladite clé.

Selon un cinquième aspect, l'invention concerne un programme pour un équipement utilisateur, comprenant des instructions de code de programme destinées à commander l'exécution de celles des étapes du procédé de détermination d'une clé précédemment décrit mises en œuvre par l'équipement utilisateur, lorsque ce programme est exécuté par cet équipement et un support d'enregistrement lisible par un équipement utilisateur sur lequel est enregistré un programme pour un équipement utilisateur.

Les avantages énoncés pour le procédé de détermination d'une clé selon le premier aspect sont transposables directement au programme pour un équipement utilisateur et au support d'enregistrement.

Selon un sixième aspect, l'invention concerne un programme pour un serveur d'authentification, comprenant des instructions de code de programme destinées à commander l'exécution de celles des étapes du procédé de détermination d'une clé précédemment décrit mises en œuvre par le serveur d'authentification, lorsque ce programme est exécuté par ce serveur et un support d'enregistrement lisible par un serveur sur lequel est enregistré un programme pour un serveur.

Les avantages énoncés pour le procédé de détermination d'une clé selon le premier aspect sont transposables directement au programme pour un serveur d'authentification et au support d'enregistrement.

La technique de détermination d'une clé destinée à sécuriser une communication entre un équipement utilisateur et un serveur applicatif sera mieux comprise à l'aide de la description suivante de modes de réalisation particuliers, en référence aux dessins annexés sur lesquels :

- la figure 1 représente un réseau de communication mobile dans lequel est mis en œuvre le procédé de détermination d'une clé dans un mode de réalisation particulier ;
- la figure 2 illustre des étapes d'un procédé de détermination d'une clé destinée à sécuriser une communication entre un équipement utilisateur et un serveur applicatif selon un mode particulier de réalisation ;
- la figure 3 représente un équipement utilisateur dans un mode de réalisation particulier ;
- la figure 4 représente un serveur d'authentification dans un mode de réalisation particulier ;
- la figure 5 représente un serveur applicatif dans un mode de réalisation particulier.

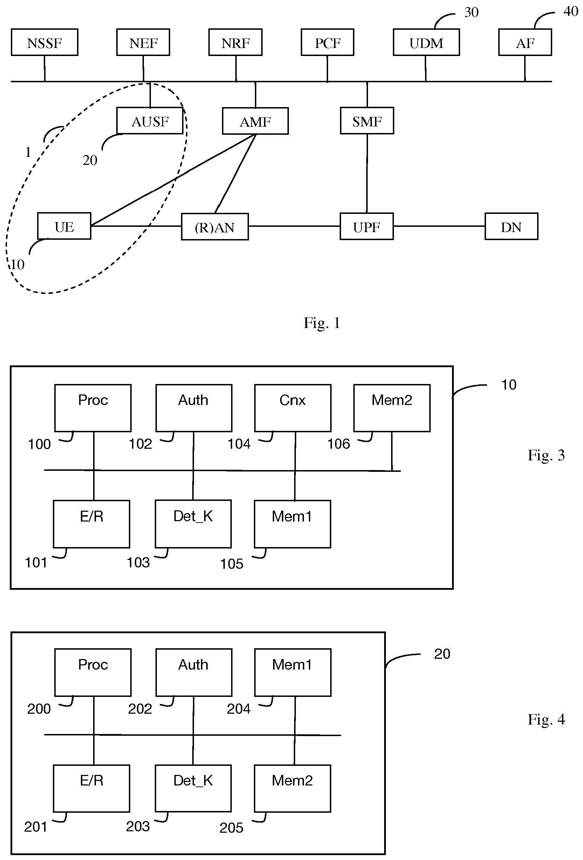

La **figure 1** représente un réseau de communication mobile dans lequel est mis en œuvre le procédé de détermination d'une clé dans un mode de réalisation particulier.

Cette figure 1 représente l'architecture du système de cinquième génération (5G) dans un réseau de communication mobile en cours de normalisation, dans un cas où l'équipement utilisateur est dans son réseau nominal. Elle correspond à la figure 423-1 du document de spécification 3GPP TS 23.501 V2.0.1 (2017-12), intitulé « System Architecture for the 5G System; Stage 2 (Release 15) ». Cette architecture de système 5G comprend une pluralité de fonctions réseau, qui sont plus particulièrement décrites fonctionnellement à la section 6 de ce document de spécification TS 23.501. Les différents acronymes de ces fonctions réseau sont détaillés en Annexe. Seules sont détaillées par la suite les fonctions réseau contribuant à la mise en œuvre du procédé de détermination d'une clé $K_{AF}$ destinée à sécuriser une communication entre un équipement utilisateur UE (pour « *User Equipment* ») et un serveur applicatif AF (pour « *Application Function* »).

Ainsi, en référence à cette figure 1, une communication sécurisée doit être établie entre un équipement utilisateur 10 et un serveur applicatif 40 afin de mettre en œuvre une application.

Un équipement utilisateur UE, également appelé terminal, est agencé pour accéder à un réseau mobile de communication, représenté sur la figure 1. L'architecture classique d'un tel équipement utilisateur distingue habituellement un environnement d'exécution comprenant un système d'exploitation adapté pour l'exécution d'applications de l'utilisateur, un environnement d'exécution responsable des communications réseau et appelé « baseband », et un élément de sécurité (le terme habituellement utilisé est le terme anglais « *Secure Element* »). L'élément de sécurité est de type « UICC » (de l'anglais « *Universal Integrated Circuit Card* »), ou « eUICC » (pour « *embedded* », ou embarquée). Un exemple de module de sécurité est une carte « USIM » (pour « *Universal Suscriber Identity Module* ») insérée dans un équipement utilisateur et utilisée en téléphonie mobile. L'élément de sécurité est agencé pour stocker et traiter des données sensibles, par exemple une application d'accès au réseau et des données d'authentification associées (on parle de « *credentials* » en anglais), telles que des clés et des algorithmes cryptographiques. De telles données sont destinées à être utilisées par un protocole d'authentification avec le réseau lors de l'accès à ce dernier. Aucune limitation n'est attachée à un équipement utilisateur de ce type et dans un autre exemple de réalisation, l'élément de sécurité de l'équipement utilisateur est une zone logicielle sécurisée, agencée pour traiter les données sensibles d'accès au réseau. L'équipement utilisateur est un équipement mobile, par exemple un terminal intelligent de type smartphone, une tablette, etc. L'utilisateur de l'équipement utilisateur a souscrit auprès d'un opérateur à un abonnement lui permettant d'accéder au réseau mobile de l'opérateur. A cet effet l'équipement utilisateur 10 comprend des données de sécurité qui constituent un profil d'accès au réseau. Un profil d'accès au réseau comprend un ensemble de données qui permettent d'accéder au réseau de façon sécurisée. Plus précisément, le profil d'accès comprend au moins un identifiant de l'équipement utilisateur 10, un identifiant du réseau auquel il peut accéder grâce à son abonnement, et des données destinées à être utilisées lors de la phase d'authentification avec le réseau, telles qu'une clé d'authentification, habituellement notée K.

L'équipement utilisateur 10 accède aux entités réseau par l'intermédiaire d'un réseau d'accès noté (R)AN sur la figure 1. Ce réseau d'accès comprend des stations de base, agencées pour gérer la transmission et la réception radio avec l'équipement utilisateur 10.

Cette architecture de système 5G est basée sur le service. Plus précisément des éléments d'architecture sont définis en tant que fonctions réseau qui offrent leurs services par l'intermédiaire d'interfaces à une infrastructure de développement commune à d'autres fonctions réseaux qui sont autorisées à les utiliser. Une fonction NRF (pour « *Network Repository Function* ») permet à chaque fonction réseau de découvrir les services offerts par les autres fonctions réseau. Par ailleurs, la fonction NEF (pour « *Network Exposure Function* ») reçoit des informations des autres fonctions réseau en fonction de capacités exposées de celles-ci. La fonction NEF mémorise les informations reçues en tant que données structurées au moyen d'une interface normalisée avec un référentiel de données unifiées UDR (pour « *Unified Data Repository* »).

Le réseau de communication mobile comprend en particulier un serveur de gestion de données unifiées UDM (pour « *Unified Data Management* »), référencé 30. Ce serveur de gestion 30 met en œuvre notamment les fonctionnalités suivantes :

- génération des données d'authentification 3GPP AKA (pour « *Authentication and Key Agreement* ») ;
- mémorisation et gestion d'un identifiant SUPI (pour « *Subscription Permanent Identifier* ») pour chaque abonné du système 5G ;
- autorisation d'accès en fonction de données de souscription ;
- gestion de l'enregistrement de la fonction réseau de rattachement de l'équipement utilisateur ;
- gestion de la souscription.

Le réseau de communication mobile comprend également un serveur d'authentification AUSF (pour *«Authentication Server Function »),* référencé 20, adapté pour authentifier les équipements utilisateurs.

De manière classique, et à des fins d'accès au réseau, le module de sécurité de l'équipement utilisateur 10 mémorise une clé d'authentification, habituellement notée K, partagée avec le serveur de gestion des données unifiées 30. La clé d'authentification K est destinée à être utilisée pour la génération de données d'authentification et pour dériver des clés telles qu'une clé $K_{AUSF}$, $K_{SEAF}$, $K_{AMF}$ et des clés de chiffrement de la signalisation, des données dans le plan utilisateur, du contrôle des ressources radio et des clés dites intermédiaires. La hiérarchie des clés est par exemple représentée à la figure 6.21-1 du document de spécification 3GPP TS 33.501 V0.6.0 (2017-12) « Security Architecture and Procédures for 5G System (Release 15) ». Lors de cette procédure d'authentification un aléa RAND est utilisé.

La clé maître $K_{AUSF}$ est une clé secrète partagée entre le serveur d'authentification 20 et l'équipement utilisateur 10. Dans le mode de réalisation décrit, ces deux dispositifs mémorisent cette clé maître $K_{AUSF}$ à l'issue d'une procédure d'authentification.

Pour une authentification EAP-AKA', la clé maître $K_{AUSF}$ est déterminée à partir d'une clé de session étendue EMSK (pour « Extended Master Session Key ») par l'équipement utilisateur 10 et le serveur d'authentification 20. Pour plus de précisions, le paragraphe 6.1.3.1 du document TS 33.501 décrit plus précisément cette procédure d'authentification EAP-AKA'. Pour une authentification 5G AKA, la clé maître $K_{AUSF}$ est déterminée à partir de clés CK/IK (pour « *Ciphering Key* » et « *Integrity Key* ») par l'équipement utilisateur 10 et le serveur d'authentification 20. La clé maître $K_{AUSF}$ est dérivée à partir des clés CK/IK, tel que spécifié au paragraphe A.2 de l'Annexe A du document TS 33.501, en mettant en œuvre une fonction de dérivation de clés KDF (pour « *Key Derivation Function* ») à des paramètres d'entrée. Pour plus de précisions, le paragraphe 6.1.3.2 du document TS 33.501 décrit plus précisément cette procédure d'authentification 5G AKA.

Par la suite, la fonction de dérivation de clé KDF correspond à la fonction spécifiée dans le document de spécification 3GPP TS 33.220 V15.1.0 (2018-01) « Generic Authentication Architecture (GAA); Generic Bootstrapping Architecture (GBA) (Release 15) ». Ce document spécifie notamment comment construire pour la fonction de dérivation de clé KDF la chaîne d'entrée S, qui fait partie des paramètres d'entrée avec la clé concernée.

Pour la mise en œuvre du procédé proposé, un service UE_AF_comm est exposé par le serveur d'authentification 20, noté par exemple Nausf_UE_AF_comm (request), en complément du service Nausf_UEAuthentication. Nausf correspond au nom donné à l'interface entre le serveur d'authentification AUSF et les autres fonctions du réseau. De même, le service UE_AF_comm est exposé par le serveur applicatif 40, noté par exemple Naf_UE_AF_comm (UE_ausf_notify). Naf correspond au nom donné à l'interface entre le serveur applicatif AF et les autres fonctions du réseau. Les services exposés par les différentes fonctions réseau sont détaillés dans le document de spécification 3GPP TS 23.502 V2.0.0 (2017-12) « Procédures for the 5G System; Stage 2 (Release 15) ».

Le serveur applicatif 40 peut aussi bien être géré par l'opérateur du réseau de communication mobile que par un tiers.

Un système 1 de détermination d'une clé destinée à sécuriser une communication entre un équipement utilisateur et un serveur applicatif comprend au moins un équipement utilisateur 10 et un serveur d'authentification 20.

Dans un mode de réalisation particulier, le système 1 comprend en outre le serveur applicatif 40.

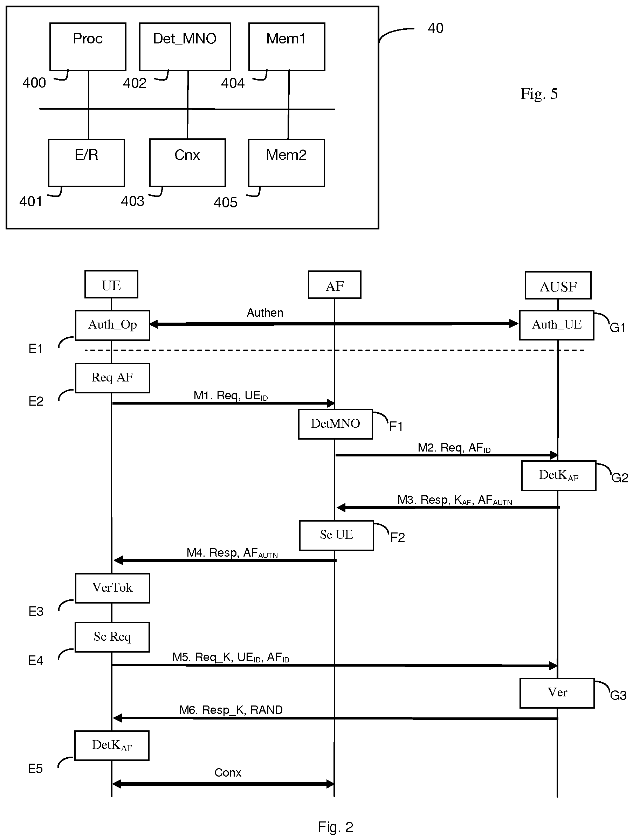

Le procédé de détermination d'une clé destinée à sécuriser une communication entre un équipement utilisateur et un serveur applicatif, mis en œuvre par l'équipement utilisateur 10, le serveur applicatif 40 et le serveur d'authentification 20, va maintenant être décrit en relation avec la **figure 2.**

On se place par la suite dans un contexte de réseau de communication mobile 5G tel que décrit précédemment.

Une procédure d'authentification est mise en œuvre par l'équipement utilisateur 10 dans une étape E1 et par le serveur d'authentification 20 dans une étape G1 lors d'un enregistrement de l'équipement utilisateur auprès du réseau de communication mobile. Lors de cette procédure d'authentification, une clé maître secrète $K_{AUSF}$ est générée par l'équipement utilisateur 10 et le serveur d'authentification 20 à partir d'un aléa RAND1. A l'issue de l'étape E1, l'équipement utilisateur 10 mémorise dans une mémoire de stockage 105 la clé maître $K_{AUSF}$ générée. De manière correspondante, à l'issue de l'étape G1, le serveur d'authentification 20 mémorise dans une mémoire de stockage 205 la clé maître $K_{AUSF}$ générée.

L'équipement utilisateur 10 envoie dans une étape E2 au serveur applicatif 40 une demande d'accès M1. Cette demande d'accès M1 comprend notamment :

- des informations permettant d'identifier le réseau de communication (par exemple le code pays du réseau MCC - *Mobile Country Code-* et le code de réseau mobile MNC - *Mobile Network Code* -),
- un identifiant de l'équipement utilisateur 10 $UE_{ID}$ qui a été fourni au préalable par l'opérateur du réseau de communication.

Cet identifiant $UE_{ID}$ est différent de l'identifiant d'abonné SUPI mais l'opérateur de réseau est agencé pour associer cet identifiant d'utilisateur $UE_{ID}$ à l'identifiant d'abonné SUPI pour une connexion donnée. Cet identifiant d'utilisateur $UE_{ID}$ est dans un mode de réalisation particulier alloué par l'opérateur de réseau.

Dans un mode de réalisation particulier, l'identifiant d'utilisateur $UE_{ID}$ comprend les informations permettant d'identifier le réseau de communication.

A titre d'exemple illustratif, l'identifiant $UE_{ID}$ prend la forme de nom.prénom@orange.fr. Un tel identifiant permet d'identifier l'équipement utilisateur et d'identifier l'opérateur Orange. Il est alors possible d'en déduire l'identifiant de réseau MCC 208 et MNC 01.

Ce message M1 est reçu par le serveur applicatif 40 dans une étape F1. Toujours au cours de cette étape F1, le serveur applicatif 40 détermine l'identifiant de réseau et envoie une requête M2 au serveur d'authentification 20 du réseau de communication de l'opérateur identifié, par l'intermédiaire du serveur en charge de la fonction d'exposition NEF le cas échéant. Cette requête M2 comprend notamment un identifiant du serveur applicatif $AF_{ID}$ et optionnellement une durée de validité requise $ExpireTime_{AF}$. L'identifiant du serveur applicatif $AF_{ID}$ correspond par exemple à « service.fr ».

Cette requête M2 est reçue par le serveur d'authentification 20 dans une étape G2. Toujours dans cette étape G2, le serveur d'authentification 20 calcule une clé $K_{AF}$ destinée à sécuriser la communication entre l'équipement utilisateur 10 et le serveur applicatif 40 au moyen de la fonction de dérivation de clé KDF appliquée à partir de la clé maître $K_{AUSF}$. La chaîne d'entrée S comprend notamment l'identifiant d'utilisateur $UE_{ID}$, une durée de validité $ExpireTime_{AUSF}$, un identifiant du serveur applicatif $AF_{ID}$ et un aléa RAND2. Ce dernier est choisi par le serveur d'authentification 20 et n'a pas de lien avec l'aléa RAND1 utilisé lors de la procédure d'authentification. La durée de validité $ExpireTime_{AUSF}$ est déterminée par le serveur d'authentification 20.

Toujours dans cette étape G2, le serveur d'authentification 20 prépare un jeton d'authentification $AF_{AUTN}$, comprenant l'identifiant du serveur applicatif $AF_{ID}$ et une preuve P à destination de l'équipement utilisateur. Cette preuve P correspond au résultat d'une fonction f utilisant en entrée la clé maître $K_{AUSF}$, l'identifiant de serveur applicatif $AF_{ID}$ et la durée de validité $ExpireTime_{AUSF}$ :

$$P = f(K_{AUSF}, AF_{ID}, ExpireTime_{AUSF}).$$

Cette fonction f est choisie afin de protéger contre un rejeu.

Ainsi le jeton d'authentification $AF_{AUTN}$ correspond à $AF_{ID} \| f(K_{AUSF}, AF_{ID}, ExpireTime_{AUSF})$ où $\|$ correspond à l'opérateur de concaténation. Dans ce jeton d'authentification, l'identifiant de serveur applicatif $AF_{ID}$ est en clair.

Le serveur d'authentification 20 mémorise alors en association avec la clé maître $K_{AUSF}$ et l'identifiant d'abonné SUPI, notamment l'identifiant d'utilisateur $UE_{ID}$ et l'identifiant de serveur applicatif $AF_{ID}$.

Puis, le serveur d'authentification 20 notifie le serveur applicatif 40 par un message M3 comprenant la clé $K_{AF}$ et le jeton d'authentification $AF_{AUTN}$. Ainsi, le serveur d'authentification 20 fournit au serveur applicatif 40 la clé calculée $K_{AF}$ et la preuve préparée à destination de l'équipement utilisateur 10, cette preuve étant destinée à être envoyée par le serveur applicatif 40 à l'équipement utilisateur 10 en réponse à la demande d'accès M1 envoyée par l'équipement utilisateur. Dans un mode de réalisation particulier, le message M3 comprend la durée de validité $ExpireTime_{AUSF}$.

Ce message M3 est reçu par le serveur applicatif 40 dans une étape F2. Dans un mode de réalisation particulier, le serveur applicatif 40 dérive deux clés $K_{AFenc}$ pour le chiffrement et $K_{AFint}$ pour la protection en intégrité à partir de $K_{AF}$.

Dans cette étape F2, le serveur applicatif 40 envoie un message M4 à l'équipement utilisateur 10 en réponse à la demande d'accès M1 reçue à l'étape F1. Ce message M4 comprend notamment le jeton d'authentification $AF_{AUTN}$ ainsi que, le cas échéant, la durée de validité $ExpireTime_{AUSF}$. On souligne ici que les échanges entre l'équipement utilisateur 10 et le serveur applicatif 40 sont protégés par des clés réseau, car l'équipement utilisateur 10 est authentifié auprès du réseau.

Dans une étape E3, l'équipement utilisateur 10 reçoit le message M4 et vérifie la preuve du jeton d'authentification $AF_{AUTN}$. Cette preuve permet à l'équipement utilisateur 10 de vérifier que le serveur applicatif 40 identifié a bien été en relation avec le serveur d'authentification 20 et qu'il dispose bien de la clé $K_{AF}$. Ceci permet de vérifier que le serveur applicatif 40 est bien autorisé et ceci avant toute dérivation de clé au niveau de l'équipement utilisateur 10. La vérification de la preuve par l'équipement utilisateur 10 conditionne l'envoi de la demande de clé $K_{AF}$ au serveur d'authentification 20.

Lorsque la preuve n'est pas vérifiée conforme, l'équipement utilisateur 10 met fin au procédé de détermination d'une clé $K_{AF}$.

Lorsque la preuve est vérifiée conforme, dans une étape E4, l'équipement utilisateur 10 envoie au serveur d'authentification 20 un message M5 de demande de clé pour communiquer avec le serveur applicatif 40. Ce message M5 comprend notamment son identifiant d'utilisateur $UE_{ID}$ et l'identifiant de serveur applicatif $AF_{ID}$. On souligne ici que les échanges entre l'équipement utilisateur 10 et le serveur d'authentification 20 sont protégés par des clés réseau, car l'équipement utilisateur 10 est authentifié auprès du réseau.

Ce message M5 de demande de clé est reçu par le serveur d'authentification 20 dans une étape G3. Le serveur d'authentification vérifie alors qu'il a déjà calculé une clé $K_{AF}$ destinée à sécuriser la communication entre l'équipement utilisateur 10 et le serveur applicatif 40 grâce aux informations mémorisées à l'étape G2. Cette vérification conditionne l'envoi à l'équipement utilisateur 10 de l'aléa RAND2. Lorsque la vérification est négative, le serveur d'authentification 20 met fin au procédé de détermination d'une clé. Lorsque la vérification est positive, le serveur d'authentification 20 envoie un message de réponse M6 à l'équipement utilisateur 10. Ce message M6 comprend notamment l'identifiant d'utilisateur $UE_{ID}$, la durée de validité $ExpireTime_{AUSF}$, l'identifiant de serveur applicatif $AF_{ID}$ et l'aléa RAND2 qui a été utilisé par le serveur d'authentification 20 pour calculer la clé $K_{AF}$.

Dans une étape E5, l'équipement utilisateur 10 reçoit le message M6 et calcule la clé $K_{AF}$ par dérivation de la clé maître $K_{AUSF}$ de la manière décrite à l'étape G2 pour le serveur d'authentification 20. Dans un mode de réalisation particulier, l'équipement utilisateur 10 dérive deux clés $K_{AFenc}$ pour le chiffrement et $K_{AFint}$ pour la protection en intégrité à partir de la clé $K_{AF}$.

Ainsi, à l'issue de cette étape E5, l'équipement utilisateur 10 a calculé une clé $K_{AF}$ destinée à sécuriser une communication avec le serveur applicatif 40. Ce dernier dispose également de cette clé $K_{AF}$ obtenue du serveur d'authentification. La détermination de cette clé a été effectuée sans exécuter de nouvelle authentification, donc sans solliciter de nouveau l'élément de sécurité de l'équipement utilisateur.

Une communication est alors établie entre l'équipement utilisateur 10 et le serveur applicatif 40 sécurisée au moyen de la clé $K_{AF}$, limitée le cas échéant par la durée de validité de $ExpireTime_{AUSF}$. Ainsi, ce procédé de détermination s'intègre à un procédé d'établissement d'une communication sécurisée entre un équipement utilisateur et un serveur applicatif.

Si la clé maître $K_{AUSF}$ est modifiée suite à une nouvelle authentification, il n'y a pas d'impact pour la communication sécurisée car la clé $K_{AF}$ est découplée de la clé maître $K_{AUSF}$.

Une clé $K_{AF}$ peut ainsi être déterminée pour chaque communication avec un serveur applicatif.

L'intégration de ce service dans le serveur d'authentification et le serveur applicatif s'effectue aisément du fait de la nouvelle architecture 5G basée sur les services. Un nouveau service Nausf_UE_AF_comm(request) est créé sur le serveur d'authentification. Le procédé s'appuie ainsi sur un serveur d'authentification existant et qui est donc déjà intégré dans le réseau de l'opérateur. Ce procédé peut ainsi plus facilement être mis en œuvre que la technique antérieure GBA. Ce procédé est également facilement mis en œuvre au niveau de l'équipement utilisateur. Un service Naf_UE_AF_comm(UE_ausf_notitfy) est créé sur le serveur applicatif. Il n'y a pas d'échanges entre le serveur d'authentification et le serveur de gestion des données unifiées UDM pour la mise en œuvre du procédé, celui-ci s'appuyant sur une authentification qui a déjà été exécutée. Le coût de déploiement d'un tel procédé est ainsi faible.

Le mode de réalisation décrit comprend une préparation par le serveur d'authentification d'une preuve à destination de l'équipement utilisateur. Cette preuve est fournie par le serveur applicatif à l'équipement utilisateur et vérifiée par ce dernier. La préparation d'une telle preuve et sa vérification ne sont pas mises en œuvre dans un autre mode de réalisation particulier.

Le mode de réalisation décrit définit des paramètres en entrée de la fonction de dérivation de clé. On souligne ici que dans certains modes de réalisation, certains de ces paramètres peuvent être absents ou bien encore d'autres paramètres peuvent être ajoutés.

On comprend que cette technique de détermination d'une clé permet de simplifier la procédure pour sécuriser une communication entre un équipement utilisateur et un serveur applicatif. Une fois, l'équipement utilisateur authentifié auprès du serveur d'authentification de son opérateur de réseau mobile, il est aisé de déterminer cette clé en levant les contraintes de la technique antérieure GBA. L'intégration de cette technique dans un réseau de communication mobile 5G est également facilitée.

Aucune limitation n'est attachée à ces différents modes de réalisation et l'homme du métier est à même d'en définir d'autres permettant de déterminer cette clé en fonction d'une clé maître partagée entre le serveur d'authentification et l'équipement utilisateur en fonction d'un aléa distinct de celui utilisé dans la procédure d'authentification.

La **figure 3** illustre de manière schématique un équipement utilisateur 10 dans un mode de réalisation particulier.

L'équipement utilisateur 10 comprend notamment :

- un processeur 100 pour exécuter des instructions de code de modules logiciels ;
- un module de communication 101, formant une interface de communication avec un réseau de communication mobile, agencé pour communiquer avec des dispositifs d'un réseau de communication, par exemple avec un serveur d'authentification et un serveur applicatif ;
- une zone mémoire 105, agencée pour mémoriser un programme qui comprend des instructions de code pour mettre en œuvre des étapes du procédé de détermination ;
- une mémoire de stockage 106, agencée pour stocker des données utilisées lors de la mise en œuvre du procédé de détermination ;
- un élément de sécurité, non représenté sur la figure 3.

L'équipement utilisateur comprend également :

- un module d'authentification 102 de l'équipement utilisateur par un serveur d'authentification 20 du réseau de communication mobile, une clé maître secrète étant générée au cours de ladite authentification par l'équipement utilisateur et le serveur d'authentification ;
- un module de calcul 103 d'une clé destinée à sécuriser une communication entre l'équipement utilisateur et le serveur applicatif au moyen d'une fonction de dérivation de clé appliquée à au moins un aléa, un identifiant d'utilisateur et un identifiant du serveur applicatif en utilisant la clé maître, ledit aléa ayant été reçu par l'équipement utilisateur du serveur d'authentification ;

- un module 104 de connexion, agencé pour établir une communication sécurisée avec un serveur applicatif 40 au moyen d'une clé $K_{AF}$.

Le module de communication 101 est notamment agencé pour envoyer au serveur d'authentification une demande de clé pour communiquer avec le serveur applicatif.

La mémoire de stockage 106 est notamment agencée pour mémoriser la clé maître $K_{AUSF}$ déterminée lors d'une procédure d'authentification. Dans un mode de réalisation particulier, cette procédure d'authentification est déclenchée lors d'un enregistrement de l'équipement utilisateur auprès du réseau de communication mobile.

Dans un mode de réalisation particulier, le module de communication 101 est notamment agencé pour envoyer au serveur applicatif une demande d'accès et pour recevoir du serveur applicatif une preuve préparée par le serveur d'authentification et à destination de l'équipement utilisateur. Le module de calcul 103 est alors agencé pour vérifier cette preuve, cette vérification conditionnant l'envoi de la demande de clé.

Dans un mode de réalisation particulier, le module de calcul 103 est agencé pour dériver deux clés $K_{AFenc}$ pour le chiffrement et $K_{AFint}$ pour la protection en intégrité à partir de $K_{AF}$.

Il est ici souligné que l'équipement utilisateur 10 comprend également d'autres modules de traitement, non représentés sur la figure 3, agencés pour mettre en œuvre les différentes fonctions de cet équipement utilisateur.

La **figure 4** illustre de manière schématique un serveur d'authentification 20 dans un mode de réalisation particulier.

Le serveur d'authentification 20 d'un réseau de communication mobile comprend notamment :

- un processeur 200 pour exécuter des instructions de code de modules logiciels ;
- un module de communication 201, formant une interface de communication avec un réseau de communication mobile, agencé pour communiquer avec des dispositifs d'un réseau de communication, par exemple avec un équipement utilisateur et un serveur applicatif ;
- une zone mémoire 204, agencée pour mémoriser un programme qui comprend des instructions de code pour mettre en œuvre des étapes du procédé de détermination ;
- une mémoire de stockage 205, agencée pour stocker des données utilisées lors de la mise en œuvre du procédé de détermination.

Le serveur d'authentification 20 comprend également :

- un module d'authentification 202, agencé pour authentifier un équipement utilisateur, une clé maître secrète étant générée au cours de ladite authentification par l'équipement utilisateur et le serveur d'authentification ;
- un module de calcul 203 d'une clé destinée à sécuriser une communication entre l'équipement utilisateur et un serveur applicatif, ladite clé étant calculée au moyen d'une fonction de dérivation de clé appliquée à au moins un aléa, un identifiant d'utilisateur et un identifiant du serveur applicatif en utilisant la clé maître.

Le module de communication 201 est notamment agencé pour recevoir une demande de clé envoyée par l'équipement utilisateur pour communiquer avec un serveur applicatif et pour envoyer à l'équipement utilisateur un aléa. Le module de communication 201 est également agencé pour fournir au serveur applicatif la clé calculée.

La mémoire de stockage 205 est notamment agencée pour mémoriser la clé maître $K_{AUSF}$ déterminée lors d'une procédure d'authentification. Dans un mode de réalisation particulier, cette procédure d'authentification est déclenchée lors d'un enregistrement de l'équipement utilisateur auprès du réseau de communication mobile.

Dans un mode de réalisation particulier, le module de calcul 203 est notamment agencé pour préparer une preuve à destination de l'équipement utilisateur. Le module de communication 201 est alors agencé pour fournir cette preuve au serveur applicatif, afin que ce dernier l'envoie à l'équipement utilisateur en réponse à une demande d'accès envoyée par l'équipement utilisateur, une vérification de cette preuve par l'équipement utilisateur conditionnant l'envoi de la demande de clé au serveur d'authentification.

Dans un mode de réalisation particulier, la mémoire de stockage 205 est agencée pour mémoriser en association avec la clé maître $K_{AUSF}$ et l'identifiant d'abonné SUPI, notamment l'identifiant d'utilisateur $UE_{ID}$ et l'identifiant de serveur applicatif $AF_{ID}$.

Dans un mode de réalisation particulier, le module de calcul 203 est notamment agencé pour vérifier qu'il a calculé une clé destinée à sécuriser une communication entre un équipement utilisateur et un serveur applicatif, cette vérification conditionnant l'envoi à l'équipement utilisateur de l'aléa. Cette vérification comprend en particulier une consultation de la mémoire de stockage 205.

Dans un mode de réalisation particulier, le serveur d'authentification comprend un module agencé pour exposer le service UE_AF_Comm, comme décrit précédemment.

Il est ici souligné que le serveur d'authentification 20 comprend également d'autres modules de traitement, non représentés sur la figure 4, agencés pour mettre en œuvre les différentes fonctions de ce serveur d'authentification.

La **figure 5** illustre de manière schématique un serveur applicatif 40 dans un mode de réalisation particulier.

Le serveur applicatif 40 comprend notamment :

- un processeur 400 pour exécuter des instructions de code de modules logiciels ;
- un module de communication 401, formant une interface de communication avec un réseau de communication mobile, agencé pour communiquer avec des dispositifs d'un réseau de communication, par exemple avec un équipement utilisateur et un serveur d'authentification ;
- une zone mémoire 404, agencée pour mémoriser un programme qui comprend des instructions de code pour mettre en œuvre des étapes du procédé de détermination ;
- une mémoire de stockage 405, agencée pour stocker des données utilisées lors de la mise en œuvre du procédé de détermination.

Le serveur applicatif 40 comprend également :

- un module 402 de détermination d'un identifiant de réseau, agencé pour déterminer à partir d'une demande d'accès M1 reçue en provenance d'un équipement utilisateur un identifiant de réseau ;
- un module 403 de connexion, agencé pour établir une communication sécurisée avec l'équipement utilisateur 10 au moyen d'une clé $K_{AF}$.

Le module de communication 401 est notamment agencé pour recevoir une demande d'accès M1 envoyée par l'équipement utilisateur et pour envoyer une requête M2 au serveur d'authentification 20 du réseau de communication de l'opérateur identifié. Le module de communication 401 est également agencé pour recevoir une clé $K_{AF}$ destinée à sécuriser une communication avec l'équipement utilisateur.

Dans un mode de réalisation particulier, le module de communication 401 est agencé pour recevoir du serveur d'authentification une preuve préparée à destination de l'équipement utilisateur 10 et pour envoyer cette preuve à l'équipement utilisateur 10 en réponse à la demande d'accès M1 envoyée par l'équipement utilisateur.

Dans un mode de réalisation particulier, le serveur applicatif 40 comprend en outre un module de calcul, agencé pour dériver deux clés $K_{AFenc}$ pour le chiffrement et $K_{AFint}$ pour la protection en intégrité à partir de $K_{AF}$.

Dans un mode de réalisation particulier, la mémoire de stockage 405 est agencée pour mémoriser en association avec l'identifiant d'utilisateur $UE_{ID}$ la clé $K_{AF}$.

Dans un mode de réalisation particulier, le serveur applicatif comprend un module agencé pour exposer le service UE_AF_Comm, comme décrit précédemment.

Il est ici souligné que le serveur applicatif 40 comprend également d'autres modules de traitement, non représentés sur la figure 5, agencés pour mettre en œuvre les différentes fonctions de ce serveur applicatif.

La technique de détermination d'une clé est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 101, 102, 103, 104 sont agencés pour mettre en œuvre des étapes du procédé de détermination précédemment décrit, mises en œuvre par l'équipement utilisateur. Il s'agit de préférence de modules logiciels comprenant des instructions logicielles pour faire exécuter celles des étapes (ou des actions) du procédé de détermination précédemment décrit, mises en œuvre par un équipement utilisateur. L'invention concerne donc aussi :

- un programme pour un équipement utilisateur, comprenant des instructions de code de programme destinées à commander l'exécution de celles des étapes (ou des actions) du procédé de détermination précédemment décrit, lorsque ledit programme est exécuté par cet équipement utilisateur ;
- un support d'enregistrement lisible par un équipement utilisateur sur lequel est enregistré le programme pour un équipement.

Dans un mode de réalisation particulier, les modules 201, 202, 203 sont agencés pour mettre en œuvre des étapes du procédé de détermination précédemment décrit, mises en œuvre par le serveur d'authentification. Il s'agit de préférence de modules logiciels comprenant des instructions logicielles pour faire exécuter celles des étapes (ou des actions) du procédé de détermination précédemment décrit, mises en œuvre par un serveur d'authentification. L'invention concerne donc aussi :

- un programme pour un serveur d'authentification, comprenant des instructions de code de programme destinées à commander l'exécution de celles des étapes (ou des actions) du procédé de détermination précédemment décrit, lorsque ledit programme est exécuté par ce serveur d'authentification ;
- un support d'enregistrement lisible par un serveur d'authentification sur lequel est enregistré le programme pour un serveur.

Dans un mode de réalisation particulier, les modules 401, 402, 403 sont agencés pour mettre en œuvre des étapes du procédé de détermination précédemment décrit, mises en œuvre par le serveur applicatif. Il s'agit de préférence de modules logiciels comprenant des instructions logicielles pour faire exécuter celles des étapes (ou des actions) du procédé de détermination précédemment décrit, mises en œuvre par un serveur applicatif. L'invention concerne donc aussi :

- un programme pour un serveur applicatif, comprenant des instructions de code de programme destinées à commander l'exécution de celles des étapes (ou des actions) du procédé de détermination précédemment décrit, lorsque ledit programme est exécuté par ce serveur applicatif ;
- un support d'enregistrement lisible par un serveur applicatif sur lequel est enregistré le programme pour un serveur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Annexe

- Authentication Server Function (AUSF)
- Access and Mobility Management Function (AMF)
- Data Network (DN), par exemple des services opérateur, un accès au réseau de communication étendu ou bien des services tiers
- Network Exposure Function (NEF)
- NF Repository Function (NRF)

- Network Slice Selection Function (NSSF)
- Policy Control Function (PCF)
- Session Management Function (SMF)
- Unified Data Management (UDM)
- User Plane Function (UPF)
- Application Function (AF)
- User Equipment (UE)
- (Radio) Access Network ((R)AN)

## Revendications

1. Procédé de détermination d'une clé destinée à sécuriser une communication entre un équipement utilisateur (10) et un serveur applicatif (40), ledit procédé comprenant :

   - une authentification (E1) de l'équipement utilisateur par un serveur d'authentification (20) d'un réseau de communication mobile, une clé maître secrète étant générée au cours de ladite authentification par l'équipement utilisateur et le serveur d'authentification ;
   - un envoi (E4) par l'équipement utilisateur au serveur d'authentification d'une demande de clé pour communiquer avec le serveur applicatif ;
   - un calcul (E5) de ladite clé au moyen d'une fonction de dérivation de clé appliquée à au moins un aléa, un identifiant d'utilisateur et un identifiant du serveur applicatif en utilisant la clé maître, ledit aléa ayant été reçu par l'équipement utilisateur du serveur d'authentification.

2. Procédé de détermination selon la revendication 1, dans lequel ladite authentification est déclenchée lors d'un enregistrement de l'équipement utilisateur auprès du réseau de communication mobile.

3. Procédé de détermination selon la revendication 1, dans lequel l'équipement utilisateur envoie (E2) au serveur applicatif une demande d'accès et reçoit du serveur applicatif une preuve préparée par le serveur d'authentification et à destination de l'équipement utilisateur, une vérification (E3) de ladite preuve par l'équipement utilisateur conditionnant l'envoi de la demande de clé.

4. Procédé de détermination d'une clé destinée à sécuriser une communication entre un équipement utilisateur (10) et un serveur applicatif (40), ledit procédé comprenant :

   - une authentification (G1) de l'équipement utilisateur par un serveur d'authentification (20) d'un réseau de communication mobile, une clé maître secrète étant générée au cours de ladite authentification par l'équipement utilisateur et le serveur d'authentification ;

- une réception (G3) par le serveur d'authentification d'une demande de clé envoyée par l'équipement utilisateur pour communiquer avec le serveur applicatif ;
- un envoi (G3) par le serveur d'authentification à l'équipement utilisateur d'un aléa ;
- un calcul (G2) de ladite clé au moyen d'une fonction de dérivation de clé appliquée à au moins l'aléa, un identifiant d'utilisateur et un identifiant du serveur applicatif en utilisant la clé maître.

5. Procédé de détermination selon la revendication 4, dans lequel le serveur d'authentification fournit (G2) au serveur applicatif une preuve préparée à destination de l'équipement utilisateur, ladite preuve étant destinée à être envoyée par le serveur applicatif à l'équipement utilisateur en réponse à une demande d'accès envoyée par l'équipement utilisateur, une vérification de ladite preuve par l'équipement utilisateur conditionnant l'envoi de la demande de clé au serveur d'authentification.

6. Procédé de détermination selon la revendication 4, dans lequel le serveur d'authentification vérifie (G3) qu'il a calculé une clé destinée à sécuriser une communication entre ledit équipement utilisateur et ledit serveur applicatif, ladite vérification conditionnant l'envoi à l'équipement utilisateur de l'aléa.

7. Equipement utilisateur (10), agencé pour communiquer avec un serveur applicatif (40) par l'intermédiaire d'un réseau de communication mobile, ledit équipement comprenant :

   - un module d'authentification (102) de l'équipement utilisateur par un serveur d'authentification (20) du réseau de communication mobile, une clé maître secrète étant générée au cours de ladite authentification par l'équipement utilisateur et le serveur d'authentification ;
   - un module d'envoi (101) par l'équipement utilisateur au serveur d'authentification d'une demande de clé pour communiquer avec le serveur applicatif ;
   - un module de calcul (103) d'une clé destinée à sécuriser une communication entre l'équipement utilisateur et le serveur applicatif au moyen d'une fonction de dérivation de clé appliquée à au moins un aléa, un identifiant d'utilisateur et un identifiant du serveur applicatif en utilisant la clé maître, ledit aléa ayant été reçu par l'équipement utilisateur du serveur d'authentification.

8. Serveur d'authentification (20) d'un réseau de communication mobile, ledit serveur d'authentification comprenant :

   - un module d'authentification (202), agencé pour authentifier un équipement utilisateur, une clé maître secrète étant générée au cours de ladite authentification par l'équipement utilisateur et le serveur d'authentification ;
   - un module de réception (201) d'une demande de clé envoyée par l'équipement utilisateur pour communiquer avec un serveur applicatif ;
   - un module d'envoi (201) par le serveur d'authentification à l'équipement utilisateur d'un aléa ;
   - un module de calcul (203) d'une clé destinée à sécuriser une communication entre l'équipement utilisateur et le serveur applicatif, ladite clé étant calculée au moyen d'une fonction de dérivation de clé appliquée à au moins l'aléa, un identifiant d'utilisateur et un identifiant du serveur applicatif en utilisant la clé maître.

9. Système (1) de détermination d'une clé destinée à sécuriser une communication entre un équipement utilisateur (10) et un serveur applicatif (40), ledit système comprenant au moins un équipement utilisateur selon la revendication 7 et un serveur d'authentification selon la revendication 8.

10. Programme pour un équipement utilisateur, comprenant des instructions de code de programme destinées à commander l'exécution des étapes du procédé de détermination selon l'une des revendications 1 à 3 mises en œuvre par l'équipement utilisateur, lorsque ledit programme est exécuté par ledit équipement.

11. Support d'enregistrement lisible par un équipement utilisateur sur lequel est enregistré le programme selon la revendication 10.

12. Programme pour un serveur d'authentification, comprenant des instructions de code de programme destinées à commander l'exécution des étapes du procédé de détermination selon l'une des revendications 4 à 6 mises en œuvre par le serveur d'authentification, lorsque ledit programme est exécuté par ledit serveur.

13. Support d'enregistrement lisible par un serveur d'authentification sur lequel est enregistré le programme selon la revendication 12.

**Patentansprüche**

1. Verfahren zur Bestimmung eines Schlüssels, der dazu bestimmt ist, eine Kommunikation zwischen einer Benutzerausrüstung (10) und einem Anwendungsserver (40) zu sichern, wobei das Verfahren enthält:

- eine Authentifizierung (E1) der Benutzerausrüstung durch einen Authentifizierungsserver (20) eines mobilen Kommunikationsnetzes, wobei ein geheimer Masterschlüssel während der Authentifizierung durch die Benutzerausrüstung und den Authentifizierungsserver generiert wird;

- ein Senden (E4) einer Schlüsselanforderung von der Benutzerausrüstung an den Authentifizierungsserver, um mit dem Anwendungsserver zu kommunizieren;

- eine Berechnung (E5) des Schlüssels mittels einer an mindestens eine Zufallszahl angewendeten Schlüsselableitungsfunktion, einer Benutzerkennung und einer Kennung des Anwendungsservers unter Verwendung des Masterschlüssels, wobei die Zufallszahl von der Benutzerausrüstung vom Authentifizierungsserver empfangen wurde.

2. Bestimmungsverfahren nach Anspruch 1, wobei die Authentifizierung bei einer Registrierung der Benutzerausrüstung beim mobilen Kommunikationsnetz ausgelöst wird.

3. Bestimmungsverfahren nach Anspruch 1, wobei die Benutzerausrüstung eine Zugangsanforderung an den Anwendungsserver sendet (E2) und vom Anwendungsserver einen vom Authentifizierungsserver vorbereiteten und für die Benutzerausrüstung bestimmten Beweis empfängt, wobei eine Überprüfung (E3) des Beweises durch die Benutzerausrüstung das Senden der Schlüsselanforderung bedingt.

4. Verfahren zur Bestimmung eines Schlüssels, der dazu bestimmt ist, eine Kommunikation zwischen einer Benutzerausrüstung (10) und einem Anwendungsserver (40) zu sichern, wobei das Verfahren enthält:

- eine Authentifizierung (G1) der Benutzerausrüstung durch einen Authentifizierungsserver (20) eines mobilen Kommunikationsnetzes, wobei ein geheimer Masterschlüssel während der Authentifizierung durch die Benutzerausrüstung und den Authentifizierungsserver generiert wird;

- einen Empfang (G3) einer Schlüsselanforderung durch den Authentifizierungsserver, die von der Benutzerausrüstung gesendet wird, um mit dem Anwendungsserver zu kommunizieren;

- ein Senden (G3) einer Zufallszahl vom Authentifizierungsserver an die Benutzerausrüstung;

- eine Berechnung (G2) des Schlüssels mittels einer an mindestens die Zufallszahl angewendeten Schlüsselableitungsfunktion, einer Benutzerkennung und einer Kennung des Anwendungsservers unter Verwendung des Masterschlüssels.

5. Bestimmungsverfahren nach Anspruch 4, wobei der Authentifizierungsserver dem Anwendungsserver einen für die Benutzerausrüstung vorbereiteten Beweis liefert (G2), wobei der Beweis dazu bestimmt ist, vom Anwendungsserver als Antwort auf eine von der Benutzerausrüstung gesendete Zugangsanforderung an die Benutzerausrüstung gesendet zu werden, wobei eine Überprüfung des Beweises durch die Benutzerausrüstung das Senden der Schlüsselanforderung an den Authentifizierungsserver bedingt.

6. Bestimmungsverfahren nach Anspruch 4, wobei der Authentifizierungsserver überprüft (G3), dass er einen Schlüssel berechnet hat, der dazu bestimmt ist, eine Kommunikation zwischen der Benutzerausrüstung und dem Anwendungsserver zu sichern, wobei die Überprüfung das Senden der Zufallszahl an die Benutzerausrüstung bedingt.

7. Benutzerausrüstung (10), die eingerichtet ist, mittels eines mobilen Kommunikationsnetzes mit einem Anwendungsserver (40) zu kommunizieren, wobei die Ausrüstung enthält:

- ein Modul zur Authentifizierung (102) der Benutzerausrüstung durch einen Authentifizierungsserver (20) des mobilen Kommunikationsnetzes, wobei ein geheimer Masterschlüssel während der Authentifizierung durch die Benutzerausrüstung und den Authentifizierungsserver generiert wird;

- ein Modul zum Senden (101) einer Schlüsselanforderung, um mit dem Anwendungsserver zu kommunizieren, von der Benutzerausrüstung an den Authentifizierungsserver;

- ein Modul zur Berechnung (103) eines Schlüssels, der dazu bestimmt ist, eine Kommunikation zwischen der Benutzerausrüstung und dem Anwendungsserver zu sichern, mittels einer an mindestens eine Zufallszahl angewendeten Schlüsselableitungsfunktion, einer Benutzerkennung und einer Kennung des Anwendungsservers unter Verwendung des Masterschlüssels, wobei die Zufallszahl von der Benutzerausrüstung vom Authentifizierungsserver empfangen wurde.

8. Authentifizierungsserver (20) eines mobilen Kommunikationsnetzes, wobei der Authentifizierungsserver enthält:

- ein Modul zur Authentifizierung (202), das eingerichtet ist, eine Benutzerausrüstung zu authentifizieren, wobei ein geheimer Masterschlüssel während der Authentifizierung durch die Benutzerausrüstung und den Authentifizierungsserver generiert wird;

- ein Modul zum Empfang (201) einer von der Benutzerausrüstung gesendeten Schlüsselanforderung, um mit einem Anwendungsserver zu kommunizieren;
- ein Modul zum Senden (201) einer Zufallszahl vom Authentifizierungsserver an die Benutzerausrüstung;
- ein Modul zur Berechnung (203) eines Schlüssels, der dazu bestimmt ist, eine Kommunikation zwischen Benutzerausrüstung und dem Anwendungsserver zu sichern, wobei der Schlüssel mittels einer an mindestens die Zufallszahl angewendeten Schlüsselableitungsfunktion, einer Benutzerkennung und einer Kennung des Anwendungsservers unter Verwendung des Masterschlüssels berechnet wird.

9. System (1) zur Bestimmung eines Schlüssels, der dazu bestimmt ist, eine Kommunikation zwischen einer Benutzerausrüstung (10) und einem Anwendungsserver (40) zu sichern, wobei das System mindestens eine Benutzerausrüstung nach Anspruch 7 und einen Authentifizierungsserver nach Anspruch 8 enthält.

10. Programm für eine Benutzerausrüstung, das Programmcodeanweisungen enthält, die dazu bestimmt sind, die Ausführung der Schritte des Bestimmungsverfahrens nach einem der Ansprüche 1 bis 3 zu steuern, die von der Benutzerausrüstung durchgeführt werden, wenn das Programm von der Ausrüstung ausgeführt wird.

11. Speicherträger, der von einer Benutzerausrüstung lesbar ist, auf dem das Programm nach Anspruch 10 gespeichert ist.

12. Programm für einen Authentifizierungsserver, das Programmcodeanweisungen enthält, die dazu bestimmt sind, die Ausführung der Schritte des Bestimmungsverfahrens nach einem der Ansprüche 4 bis 6 zu steuern, die vom Authentifizierungsserver ausgeführt werden, wenn das Programm vom Server ausgeführt wird.

13. Speicherträger, der für einen Authentifizierungsserver lesbar ist, auf dem das Programm nach Anspruch 12 gespeichert ist.

**Claims**

1. Method for determining a key intended to make a communication between a user equipment (10) and an application server (40) secure, said method comprising:

    - an authentication (E1) of the user equipment by an authentication server (20) of a mobile communication network, a secret master key being generated, during said authentication, by the user equipment and the authentication server;
    - sending (E4) by the user equipment to the authentication server, a key request with a view to communicating with the application server;
    - computing (E5) said key by means of a key derivation function applied to at least a random variable, a user identifier and an identifier of the application server and using the master key, said random variable having been received by the user equipment from the authentication server.

2. Determining method according to Claim 1, wherein said authentication is triggered during registration of the user equipment with the mobile communication network.

3. Determining method according to Claim 1, wherein the user equipment sends (E2), to the application server, an access request and receives, from the application server, a proof prepared by the authentication server and intended for the user equipment, whether or not the key request is sent depending on a verification (E3) of said proof by the user equipment.

4. Method for determining a key intended to make a communication between a user equipment (10) and an application server (40) secure, said method comprising:

    - an authentication (G1) of the user equipment by an authentication server (20) of a mobile communication network, a secret master key being generated, during said authentication, by the user equipment and the authentication server;
    - receiving (G3) by the authentication server a key request that was sent by the user equipment with a view to communicating with the application server;
    - sending (G3) a random variable by the authentication server to the user equipment;
    - computing (G2) said key by means of a key derivation function applied to at least the random variable, a user identifier and an identifier of the application server and using the master key.

5. Determining method according to Claim 4, wherein the authentication server delivers (G2) to the application server a prepared proof intended for the user equipment, said proof being intended to be sent, by the application server, to the user equipment in response to an access request sent by the user equipment, whether or not the key request is sent to the authentication server depending on a verification of said proof by the user equipment.

6. Determining method according to Claim 4, wherein the authentication server verifies (G3) that it has computed a key intended to make a communication between said user equipment and said application server secure, whether or not the random variable is sent to the user equipment depending on said verification.

7. User equipment (10), arranged to communicate with an application server (40) via a mobile communication network, said equipment comprising:

   - an authentication module (102) allowing an authentication server (20) of the mobile communication network to perform an authentication of the user equipment, a secret master key being generated, during said authentication, by the user equipment and the authentication server;
   - a send module (101) allowing the user equipment to send, to the authentication server, a key request with a view to communicating with the application server;
   - a computing module (103) allowing a key intended to make a communication between the user equipment and the application server secure to be computed by means of a key derivation function applied to at least a random variable, a user identifier and an identifier of the application server and using the master key, said random variable having been received by the user equipment from the authentication server.

8. Authentication server (20) of a mobile communication network, said authentication server comprising:

   - an authentication module (202), arranged to perform an authentication of a user equipment, a secret master key being generated, during said authentication, by the user equipment and the authentication server;
   - a receive module (201) for receiving a key request that was sent by the user equipment with a view to communicating with an application server;
   - a send module (201) allowing the authentication server to send a random variable to the user equipment;
   - a computing module (203) for computing a key intended to make a communication between the user equipment and the application server secure, said key being computed by means of a key derivation function applied to at least the random variable, a user identifier and an identifier of the application server and using the master key.

9. System (1) for determining a key intended to make a communication between a user equipment (10) and an application server (40) secure, said system comprising at least a user equipment according to Claim 7 and an authentication server according to Claim 8.

10. Program for a user equipment, containing program-code instructions intended to command the execution of the steps of the determining method according to one of Claims 1 to 3, these steps being implemented by the user equipment when said program is executed by said equipment.

11. Storage medium that is readable by a user equipment, on which is stored the program according to Claim 10.

12. Program for an authentication server, containing program-code instructions intended to command the execution of the steps of the determining method according to one of Claims 4 to 6, these steps being implemented by the authentication server when said program is executed by said server.

13. Storage medium that is readable by an authentication server, on which is stored the program according to Claim 12.

Fig. 1

Fig. 3

Fig. 4

Fig. 5

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Security Architecture and Procédures for 5G System (Release 15). *3GPP TS 33.501 V0.6.0,* Décembre 2017
- System Architecture for the 5G System; Stage 2 (Release 15). *3GPP TS 23.501 V2.0.1,* Décembre 2017
- Generic Authentication Architecture (GAA); Generic Bootstrapping Architecture (GBA) (Release 15). *3GPP TS 33.220 V15.1.0,* Janvier 2018
- Procédures for the 5G System; Stage 2 (Release 15). *3GPP TS 23.502 V2.0.0,* Décembre 2017